## Europäisches Patentamt

## European Patent Office

## Office européen des brevets

(19)

(11) Publication number: **0 170 004**

**A1**

(12) # EUROPEAN PATENT APPLICATION

(21) Application number: **85106735.5**

(22) Date of filing: **31.05.85**

(51) Int. Cl.⁴: **G 11 B 5/265**
**G 11 B 5/127**

(30) Priority: **01.06.84 JP 110729/84**

(43) Date of publication of application:
**05.02.86 Bulletin 86/6**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Kumasaka, Noriyuki**
**1-1-24, Suehiro-cho**
**Ome-shi Tokyo(JP)**

(72) Inventor: **Otomo, Shigekazu**
**2-15-404, 259-1, Kamihirose**
**Sayama-shi Saitama-ken(JP)**

(72) Inventor: **Yamashita, Takeo**
**F204, 1-47-3, Akatsuki-cho**
**Hachioji-shi Tokyo(JP)**

(72) Inventor: **Shiiki, Kazuo**
**2644-6, Kawajiri Shiroyama-cho**
**Tsukui-gun Kanagawa-ken(JP)**

(72) Inventor: **Shiroishi, Yoshihiro**
**A101, 2-32, Koyasu-cho**
**Hachioji-shi Tokyo(JP)**

(72) Inventor: **Saito, Noritoshi**
**1-48-18, Akatsuki-cho**
**Hachioji-shi Tokyo(JP)**

(72) Inventor: **Kudo, Mitsuhiro**
**1-8-63, Sakae-cho Hamuramachi**
**Nishitama-gun Tokyo(JP)**

(74) Representative: **Altenburg, Udo, Dipl.-Phys. et al,**
**Patent- und Rechtsanwälte**
**Bardehle-Pagenberg-Dost-Altenburg & Partner Postfach**
**86 06 20**
**D-8000 München 86(DE)**

(54) **Magnetic head.**

(57) Disclosed is a magnetic head comprising:

i) a recording and reproducing head having a first core (30) in which a magnetic circuit is constructed of a ferrite of high permeability serving as a protection core (33, 33') and a magnetic metal substance of (34, 34') of high saturation flux density formed on the ferrite (33, 33') and defining functional gap facing planes, and

ii) an erasing head of unitary structure having a second core (131) in which a magnetic circuit is constructed of either another ferrite (133, 133') of high permeability alone or another ferrite of (133, 133') of high permeability and another magnetic metal substance (134, 134') of high saturation flux density, the erasing head including a pair of erasing functional gaps (137, 137') which are so arranged as to erase both edges of a track in a recorded portion formed on a magnetic recording medium by the recording and reproducing head and to leave a desired recording track width without erasing it,

the recording and reproducing head and the erasing head being coupled and joined unitarily in a direction in which the magnetic recording medium travels.

*FIG. 3*

Specification

Title of the Invention

Magnetic head

Background of the Invention

The present invention relates to a magnetic head which can record a signal on a magnetic recording medium and also form guard bands in a no-signal state on both the sides of a recording track, and more particularly to the magnetic head of this type which is well suited for application to a recording and reproducing system for magnetic discs.

In case of a magnetic disc system wherein recording tracks are formed in the circumferential direction of a disc-shaped recording medium, when the distance between the two adjacent tracks is shortened to raise the recording density, the crosstalk between the adjacent tracks poses a problem in the reproducing mode.

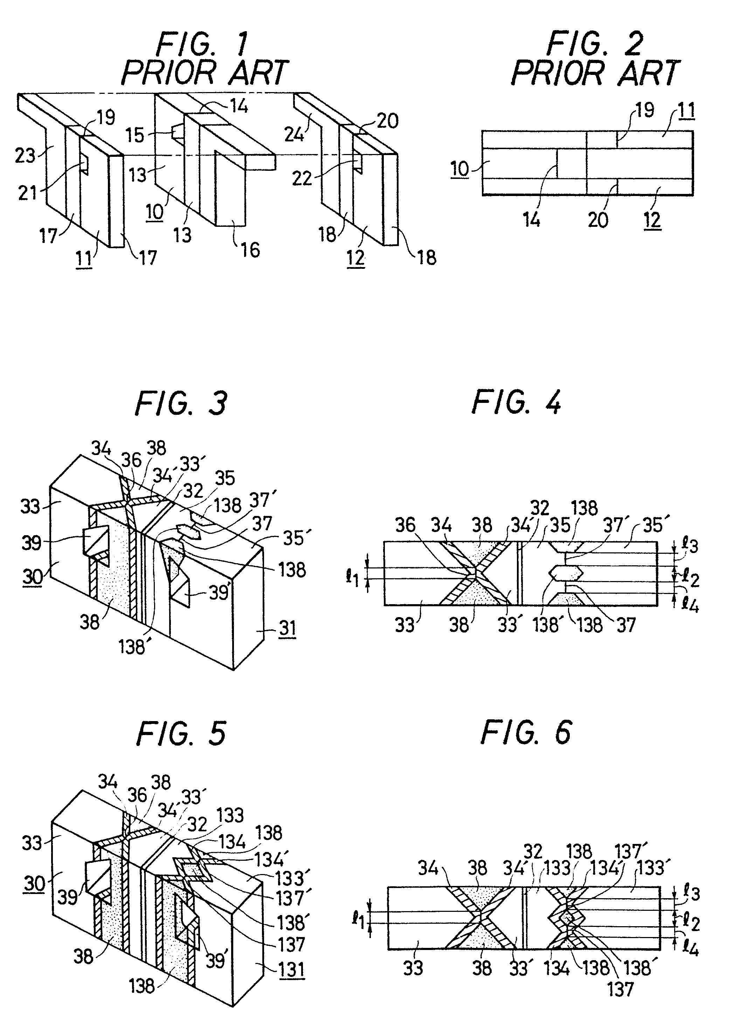

To the end of preventing such crosstalk, a prior-art magnetic head for recording and reproducing has employed a structure as shown in Figs. 1 and 2 by way of example. This magnetic head comprises three head cores 10, 11 and 12. The first head core 10 is composed of a magnetic core portion 13 which has a functional gap 14 and a winding window 15 and which is made of ferrite, and an L-shaped member 16 which is made of a nonmagnetic substance such as ceramics. Likewise, the second and third head cores 11, 12 are composed of magnetic core portions 17, 18 made of ferrite and L-shaped nonmagnetic members 23, 24 and are formed with functional gaps 19, 20 and winding windows 21, 22, respectively. These head cores 10, 11 and 12 are cut at predetermined widths out of an identical block, and they are unitarily joined as shown in Fig. 2. The middle head core 10 is for recording and reproducing, and the head cores 11 and 12 on both the sides thereof are for erasing.

By the way, Fig. 1 is an exploded perspective view of the prior-art magnetic head, while Fig. 2 is a top plan view of this magnetic head seen from the side of its surface facing a recording medium.

Owing to such construction, the pair of gaps for erasing 19 and 20 scan just the sideward parts of a recording track which is formed by the gap for recording and reproducing 14 of the surface of the magnetic head facing the magnetic recording medium as illustrated in Fig. 2. Accordingly, both the sides of the recording track become guard bands in a substantially perfectly null signal state. Therefore, even when the distance between the adjacent tracks is shortened, the crosstalk from the adjacent tracks hardly arises in the reproducing mode.

With the magnetic head of the aforementioned structure, however, the respective head cores _10_, _11_ and _12_ must be stacked and joined after having been cut out of the block. On this occasion, especially the positioning of the respective gaps 14, 19 and 20 is a very difficult job. In addition, when the track width is 30 μm or less, the head cores come to have low mechanical strengths and become difficult of machining.

Further, recording media of high coercive forces have recently been used for the purpose of shortening also the recording wavelength, and the present-day ferrites have become unsatisfactory for a magnetic head which can sufficiently record signals on such media. A magnetic material of high saturation flux density and high permeability is limited to a magnetic metal substance. As is well known, however, a bulky magnetic metal material has the drawback that favorable characteristics cannot be attained in a high frequency region on account of the eddy current loss. In order to solve this, a magnetic head has been proposed which adopts a magnetic metal film of multilayer structure formed by thin-film forming technology. However, it is a task of extreme difficulty to realize such a film in the structure of Figs. 1 and 2.

The following reference is cited to show the state of the art;

- 4 -                                    0170004

Official Gazette of Japanese Patent Application
Publication No. 53-31763.

Summary of the Invention

An object of the present invention is to eliminate
the difficulties of the prior arts described above,
and to provide a magnetic head comprising a gap for
recording and reproducing and a pair of gaps for erasing,
which can be manufactured very simply and at high precision
and which can satisfactorily record signals even on
a recording medium of high coercive force.

In order to accomplish the object, the magnetic
head of the present invention comprises:

i) a recording and reproducing head having a first
core in which a magnetic circuit is constructed of a
ferrite of high permeability serving as a protection
core and a magnetic metal substance of high saturation
flux density formed on the ferrite and defining functional
gap facing planes, and

ii) an erasing head of unitary structure having
a second core in which a magnetic circuit is constructed
of either another ferrite of high permeability alone
or another ferrite of high permeability and another
magnetic metal substance of high saturation flux density,
the erasing head including a pair of erasing functional
gaps which are so arranged as to erase both edges of a track in a recorded portion formed on a magnetic recording medium by the recording and reproducing head and to leave a desired recording track width without erasing it,

the recording and reproducing head and the erasing head being coupled and joined unitarily in a direction in which the magnetic recording medium travels.

In the case of the erasing head where the magnetic circuit is constructed of another ferrite of high permeability and another magnetic metal substance of high saturation flux density, the magnetic metal substance is formed on the ferrite and defines the pair of erasing functional gap facing planes.

The recording and reproducing head and the erasing head are so arranged that both the side edges of a track width in the recorded portion formed on the magnetic recording medium by the recording and reproducing head are erased by the use of the second core of the erasing head to leave the desired recording track width.

More in the concrete, at least in the surface of the recording and reproducing magnetic head facing the recording medium, the joined parts of the magnetic metal substance and the ferrite of high permeability do not have any part parallel to a functional gap. As such an example, it is possible to mention a magnetic core wherein a pair of magnetic metal films at least either of which has a substantially V-like cross-sectional shape and which constitute the magnetic circuit have their protrusions butted to each other through a nonmagnetic gap material, thereby to form the functional gap of the first core; the cross-sectional part of the V-shape is exposed to the surface facing the magnetic recording medium; the fore ends of the protrusions of the pair of magnetic metal films have planes which are parallel to each other and which are substantially orthogonal to the traveling direction of the magnetic recording medium; the width of each of the planes as indicated by the intersection line between the plane and the surface facing the magnetic recording medium corresponds to the track width; and the magnetic metal film is formed on the ferrite of high permeability which has a protrusion of a shape corresponding to the V-shape.

The thickness of the magnetic metal film having the V-shaped cross section may be so selected that the aforementioned width of the plane forming the fore end of the protrusion corresponds to the track width, and it is usually about $\frac{1}{2}$ of the track width. In addition, when the apical angle of the protrusion is set at 45 ° - 90 °, especially the fabrication of the core is facilitated. However, this is not restrictive as the core can also be fabricated outside the angular range.

The reason why the joined parts of the magnetic metal substance and the ferrite of high permeability are given no part parallel to the functional gap as described above, is that when the joined parts and the functional gap are parallel, the former acts as a pseudo gap to deteriorate recording and reproducing characteristics.

As another example of the head structure which is so constructed that the joined parts have no part parallel to the functional gap, it is possible to mention a structure wherein at least either of members of the magnetic metal substance is buried in a groove which is formed in the ferrite of high permeability and which has a width being at least equal to the track width.

Meanwhile, as the erasing head, one made of, e.g., a ferrite single crystal is mentioned from the aspects of high machining precision and easy fabrication. In general, the second core for the erasing head can stipulate the required recording track width in such a way that the width for the recording track to be left behind without being erased is rendered equal to or smaller than the track width of the first core. More specifically, the recording track portion recorded by the first head core runs in the part of the intersection line between the surface facing the recording medium and the joint opposition plane of a part where a nonmagnetic filler lies, in the

0170004

middle of the joined parts of a pair of ferrite core halves which are jointed through the pair of functional gaps, and a pair of erasing gaps scan just both the sideward parts of the recording track portion. Accordingly, both the sides of the recorded track become guard bands in a substantially perfectly null signal state.

The recording and reproducing head and the erasing head of the structures as stated above are unitarily joined serially in the moving direction of the magnetic recording medium, to construct the single magnetic head.

Mentioned as another example of the second core of the erasing head is one which is fabricated by a method similar to that of the first core and in which the pair of erasing functional gaps whose gap facing planes are made of the magnetic metal substance of high saturation flux density formed on a protection core made of the ferrite of high permeability are arranged in parallel so as to coincide with both the side parts of the track width of the first core. Also in this case, the first core of the recording and reproducing head and the second core of the erasing head are unitarily joined in series, to construct the single magnetic head.

The magnetic metal substance for use in the magnetic head of the present invention may well be an identical material for both the first core and the second core, and different materials can also be readily employed.

As the ferrite of high permeability for the protection core and the second core of the magnetic head of the present invention, the single crystal or polycrystal of an Mn-Zn ferrite or an Ni-Zn ferrite is mentioned. The magnetic metal films may be made of any material of high permeability (more preferably, permeability of at least 1000 at 1 - 5 MHz) whose saturation flux density $B_s$ is higher than that of the ferrite, more preferably, at least 8000 G, and whose magnetostriction is within $\pm 10^{-6}$. As such typical materials, it is possible to mention polycrystalline magnetic metal materials such as Fe-Al-Si alloys (so-called sendust type alloys), Ni-Fe alloys (so-called permalloy type alloys) and Fe-Si alloys, or amorphous magnetic alloys, for example, a material whose principal component is at least one of Co, Fe and Ni and which contains one or more glass former elements selected from the group consisting of Zr, Nb, W, Ti, Ta, Cr, Al, Mn, Zn, V, Re and Y. In some cases, a noble metal such as Pt, Ru, Au or Pd is added in order to increase corrosion resistance. In the case where the erasing functional gap facing planes are made of the magnetic metal substance, such a high permeability as required of the recording and reproducing head is not especially needed.

These magnetic metal materials are deposited by thin-film forming technology such as sputtering or evaporation.

The groove portion made by the forming of the track width of the magnetic head core is filled up with a nonmagnetic material such as glass or resin.

The interspace between the pair of erasing gaps of the second core of the erasing head is filled up with a nonmagnetic material such as glass or resin to form a predetermined distance between the two gaps.

The particulars of the recording and reproducing head portion of the magnetic head of the present invention are described in detail in, for example, the official gazette of Japanese Patent Application Laying-open No. 58-155513.

Besides, in the magnetic head of the present invention and a method of manufacturing it, matters not described in this specification may well be resorted to knowledge in prior arts in the technical field concerned.

Brief Description of the Drawings

Fig. 1 is an exploded perspective view of a prior-art magnetic head capable of forming guard bands, while Fig. 2 is a top plan view of the prior-art magnetic head capable of forming guard bands;

Fig. 3 is a perspective view of a magnetic head in an embodiment of the present invention, while Fig. 4 is a top plan view of the magnetic head in Fig. 3;

Fig. 5 is perspective view of a magnetic head in

another embodiment of the present invention, while Fig. 6 is a top plan view of the magnetic head in Fig. 5; and

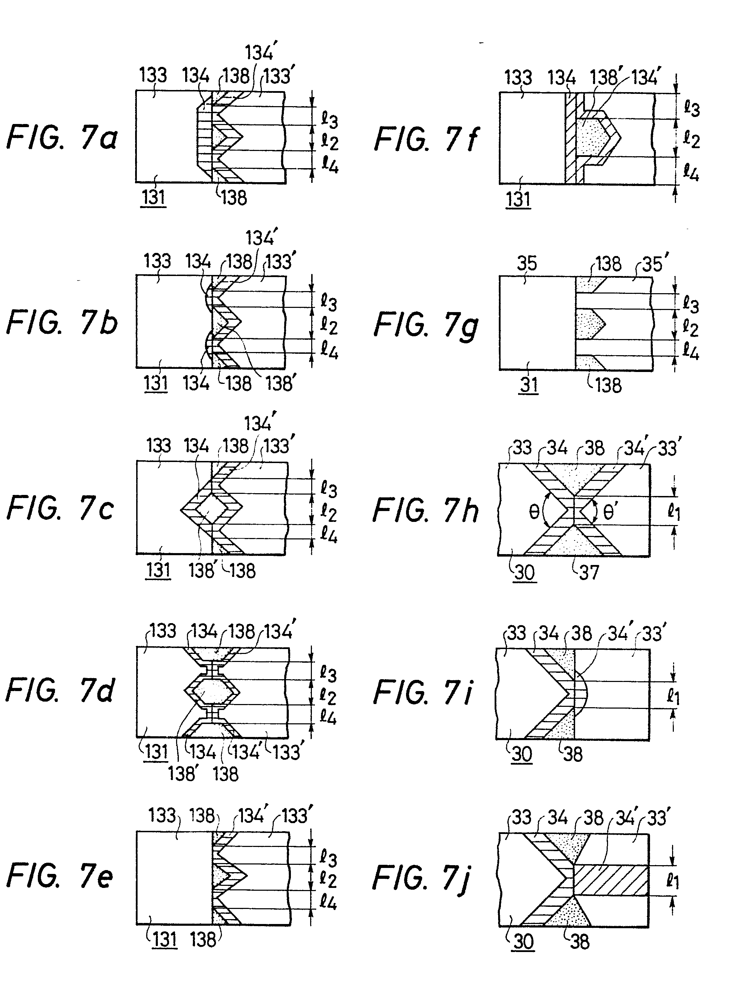

Figs. 7a - 7g are top plan views showing the erasing head portions of magnetic heads in various embodiments of the present invention, while Figs. 7h - 7j are top plan views showing the recording and reproducing head portions of the magnetic heads in the various embodiments.

Description of the Preferred Embodiments

Embodiment 1:

Fig. 3 is a perspective view showing the structure of a magnetic head in this embodiment, while Fig. 4 is a top plan view of the magnetic head seen from the side of its surface facing a recording medium.

Numeral 30 in Figs. 3 and 4 designates a first core for a recording and reproducing head, and numeral 31 a second core for an erasing head, which is serially joined to the first core through a nonmagnetic member 32.

Numerals 33 and 33' designate the auxiliary or protection cores of the first core, which are made of the bulky materials of an Mn-Zn ferrite or an Ni-Zn ferrite. The first core 30 is such that the opposing parts of the core halves form V-shaped protrusions. The apexes of the protrusions and both the side surfaces thereof forming feet continuous to the apexes are made of a magnetic metal substances 34 and 34' which are higher in the saturation flux density than the aforementioned ferrite. The magnetic metal substances 34 and 34' are made of, for example, an amorphous magnetic alloy $Co_{84}Nb_{13}Zr_3$, and are formed by sputtering. The butt parts of the magnetic metal substances 34 and 34' are lapped in order to form a functional gap 36 having a predetermined track width, thereby to obtain the required track width $\ell_1$ indicated in the top plan view of Fig. 4. In addition, in notches on both the sides of the functional gap 36, a nonmagnetic filler 38 such as glass, ceramics or resin is packed as a reinforcing material.

In an example of the present embodiment, the thickness of each of the magnetic metal substances 34 and 34' was 40 μm, the track width $\ell_1$ was 76 μm, and the nonmagnetic filler 38 was glass.

The second core 31 of the erasing head is such that core halves 35 and 35' are made of the bulky materials of an Mn-Zn ferrite. Functional gaps 37 and 37' for erasing which are formed at the butt parts of the core halves 35 and 35' define track widths $\ell_3$ and $\ell_4$ for erasing respectively as indicated in the top plan view of Fig. 4. The width $\ell_2$ of a non-gap part held between the pair of erasing functional gaps 37 and 37' is so set that the required track width is left behind when both the edges of a track recorded on the recording medium at a width of approximately $\ell_1$ have been erased. Since the vicinities of the gaps are structurally fined in order to attain a narrow track, recesses are filled up with a nonmagnetic material 138 such as glass ,and the middle non-gap part is also filled up with a nonmagnetic material 138' such as glass.

Numerals 39 and 39' in Figs. 3 and 4 denote winding-windows for the respective cores.  Although not shown in Fig. 3, a coil is wound on the cores.  Here, regarding gap lengths, the functional gaps for erasing are rendered long relative to the functional gap for recording and reproducing 36 so as to ensure sufficient erasing.  Thus, even when the second core of the erasing head is made of only the ferrite, the erasing can be satisfactorily done by properly enlarging the functional gap length for the erasing.

In the example of the present embodiment, each of the erasing track widths $l_3$ and $l_4$ was 50 µm, the width $l_2$ of the non-gap part was 74 µm, the distance between the recording and reproducing functional gap 36 and the erasing functional gaps 37, 37' was 400 µm, the recording and reproducing functional gap length was 0.3 µm, and the erasing functional gap length was 1.5 µm.

The first core 30 of the recording and reproducing head and the second core 31 of the erasing head are joined  through the nonmagnetic member 32 serially in the direction in which the magnetic recording medium moves.  The erasing functional gaps 37 and 37' extend substantially orthogonally to the moving direction of the magnetic recording medium.  The direction in which the middle position of the recording and reproducing functional gap 36 is connected with the central position between the two erasing functional gaps 37 and 37', is substantially in agreement with the moving direction of the recording medium.

In the example of the present embodiment, the nonmagnetic material 32 was glass, by which the first core 30 and the second core 31 were joined into the unitary assembly. Apart from the glass, any nonmagnetic material having a bonding property, such as a high polymer resin, may be used.

The magnetic head capable of forming the guard bands, of the present embodiment thus fabricated was similar in the manufacturing process to a conventional composite magnetic head and did not particularly involve a difficult step, so that the fabrication was easy. Moreover, since the faces constituting the functional gap for recording and reproducing are made of the magnetic metal substance of high saturation flux density, a magnetic recording medium of high coercive force could be used. The track width which was left behind after the recording on the recording medium by the magnetic head of the present embodiment was 70 μm.

Embodiment 2:

Fig. 5 is a perspective view showing the structure

- 16 -    0170004

of a magnetic head in this embodiment, while Fig. 6 is a top plan view of the magnetic head seen from the side of its surface facing a recording medium.

Numeral $\underline{30}$ in Figs. 5 and 6 designates a first core for a recording and reproducing head, which has the same structure as that of the first core of Embodiment 1 shown in Fig. 3. On the other hand, in a second core $\underline{131}$ for an erasing head, the opposing parts of respective core halves 133 and 133' made of a ferrite form W-shaped protrustions. Magnetic metal substances 134 and 134' which are higher in the saturation flux density than the ferrite, for example, a crystalline alloy such as Fe-Al-Si or Ni-Fe or an amorphous alloy such as Co-Zr type alloy, are deposited on the apexes of the protrusions and both the side surfaces thereof forming feet continuous to the apexes. Here, the butt parts of the pair of magnetic metal substances 134 and 134' are lapped in order to form erasing gaps 137 and 137' having predetermined erasing track widths, thereby to form the erasing track widths $\ell_3$ and $\ell_4$. The width $\ell_2$ of a non-gap part held between the erasing functional gaps is so set that a required track width is left behind when both the edges of the track width recorded at $\ell_1$ have been erased. The magnetic head of such construction exhibits high performances for recording and reproducing and for erasing as to a recording medium of high coercive force, and is advantageous for high density magnetic recording. Although not shown in Fig. 5 as in Fig. 3, a coil is wound on the cores.

Symbols in Figs. 5 and 6 not mentioned in the above denote the same portions as the symbols in Figs. 3 and 4 explained in Embodiment 1. In the present embodiment, items not stated in the above are similar to those of Embodiment 1.

The magnetic head of the present embodiment capable of forming the guard bands had excellent characteristics especially for the recording medium of high coercive force as described above, and was also easy of fabrication as described in Embodiment 1.

Embodiment 3:

In this embodiment, magnetic heads capable of forming guard bands were fabricated using various structures as a second core for an erasing head and a first core for a recording and reproducing head. Figs. 7a - 7g are top plan views of the second cores of the erasing heads used in the magnetic heads of this embodiment as seen from the side of their surfaces facing magnetic recording media, while Figs. 7h - 7j are top plan views of the first cores of the recording and reproducing heads as seen from the side of their surfaces facing the magnetic recording media.

The second cores in Figs. 7a - 7g and the first cores in Figs. 7h - 7j were respectively combined properly and joined unitarily as shown in Embodiments 1 and 2, whereby the magnetic heads of the present embodiment each being capable of forming the guard gands were fabricated. In the present embodiment, items (including symbols in the drawings) not mentioned in the above are similar to those of Embodiment 1 or 2.

Each of the magnetic heads of the present embodiment had merits similar to those of Embodiment 1 or 2.

As set forth above, according to the present invention, even when a recording medium of high coercive force is used, signals can be recorded and reproduced satisfactorily, and parts other than a required recording track width can be erased, so that a magnetic head of high recording density can be provided. Another effect is that the magnetic head of the present invention is well suited for application as a magnetic head for a magnetic recording device such as magnetic disc. Further, the magnetic head of the invention has a head structure of high productivity owing to the fact that the core of a recording and reproducing head and the core of an erasing head are put into a unitary form.

The magnetic head of the present invention can generate sharp and intense magnetic fields from functional gaps, and it is suitable, not only for a magnetic disc

- 19 -                    0170004

device for planar recording, but also for a magnetic
disc device of the perpendicular magnetic recording
system.

In the magnetic head of the present invention, items
not described in this specification may be resorted to
those hitherto known in the art.

Obviously many modifications and variations of
the present invention are possible in the light of the
above teachings.  It is therefore to be understood that
within the scope of the appended claims the invention
may be practiced otherwise than as specifically described.

## Claims

1.  A magnetic head comprising a recording and reproducing head having a first core in which a magnetic circuit is constructed of a ferrite of high permeability to serve as a protection core and a magnetic metal substance of high saturation flux density formed on said ferrite and defining functional gap facing planes; and an erasing head of unitary structure having a second core in which a magnetic circuit is constructed of a ferrite of high permeability alone, said erasing head being so arranged that both edges of a track width of a magnetic recording portion formed on a magnetic recording medium by said recording and reproducing head are erased by the use of said second core including a pair of erasing functional gaps, to leave a desired recording track width; said recording and reproducing head and said erasing head being unitarily coupled and joined in a traveling direction of the magnetic recording medium.

2.  A magnetic head according to Claim 1, wherein in at least a surface of said recording and reproducing head facing the recording medium, joined  parts of the magnetic metal substance and the high permeability ferrite do not have any part parallel to the functional gap.

3.  A magnetic head comprising a recording and reproducing head having a first core in which a magnetic circuit is constructed of a ferrite of high permeability to serve as a protection core and a magnetic metal substance of high saturation flux density formed on said ferrite and defining functional gap facing planes; and an erasing head of unitary structure having a second core in which a magnetic circuit is constructed of another ferrite of high permeability and a magnetic metal substance of high saturation flux density formed on the other ferrite of high permeability and defining a pair of erasing functional gap facing planes, said erasing head being so arranged that both edges of a track width of a recording portion formed on a magnetic recording medium by said recording and reproducing head are erased by the use of said second core to leave a desired recording track width; said recording and reproducing head and said erasing head being unitarily coupled and joined in a traveling direction of the magnetic recording medium.

4. A magnetic head according to Claim 3, wherein in at least a surface of said recording and reproducing head facing the recording medium, joined parts of the magnetic metal substance and the high permeability ferrite do not have any part parallel to the functional gap.

5. A magnetic head according to Claim 2, wherein said first core includes a pair of films of the magnetic metal substance at least either of which has a substantially V-like cross-sectional shape and which have their protrusions butted to each other through a nonmagnetic gap material so as to form the functional gap; the V-shaped cross-sectional part of the magnetic metal film is exposed to a surface of said first core facing the magnetic recording medium; fore ends of said protrusions of the pair of magnetic metal films form planes which are parallel to each other and which are substantially orthogonal to the traveling direction of the magnetic recording medium; a width of each of the planes as indicated by an intersectional line between the plane and the surface facing the magnetic recording medium corresponds to the track width; and the magnetic metal film is formed on the high permeability ferrite which has a protrusion of a shape corresponding to the V-shape.

6.   A magnetic head according to Claim 4, wherein said first core includes a pair of films of the magnetic metal substance at least either of which has a substantially V-like cross-sectional shape and which have their protrusions butted to each other through a nonmagnetic gap material so as to formxthe functional gap; the V-shaped cross-sectional part of the magnetic metal film is exposed to a surface of said first core facing the magnetic recording medium; fore ends of said protrusions of the pair of magnetic metal films form planes which are parallel to each other and which are substantially orthogonal to the traveling direction of the magnetic recording medium; a width of each of the planes as indicated by an intersectional line between the plane and the surface facing the magnetic recording medium corresponds to the track width; and the magnetic metal film is formed on the high permeability ferrite which has a protrusion of a shape corresponding to the V-shape.

## FIG. 1
## PRIOR ART

## FIG. 2
## PRIOR ART

## FIG. 3

## FIG. 4

## FIG. 5

## FIG. 6

2/2    0170004

FIG. 7a

FIG. 7b

FIG. 7c

FIG. 7d

FIG. 7e

FIG. 7f

FIG. 7g

FIG. 7h

FIG. 7i

FIG. 7j

0170004

European Patent
Office

EUROPEAN SEARCH REPORT

Application number

EP 85 10 6735

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| P,Y A | EP-A-0 140 977 (HITACHI)  * Page 14, line 16 - page 17, line 13; figures 3,4 * | 1,2,3-6 | G 11 B 5/265 G 11 B 5/127 |
| P,Y A | EP-A-0 125 891 (HITACHI)  * Page 25, line 9 - page 26, line 11; figure 12 * | 1,2,5,6 | |
| D,Y A | PATENT ABSTRACTS OF JAPAN, vol. 7, no. 278, 10th December 1983, page 117 P 242 (P-242) (1423); & JP-A-58-155513 (HITACHI) 16-09-1983 | 1,2,5,6 | |
| A | PATENT ABSTRACTS OF JAPAN, vol. 6, no. 116, 29th June 1982, page (P-125) (994); & JP-A-44219 (SONY) 12-03-1982 | 1,5 | TECHNICAL FIELDS SEARCHED (Int Cl 4) |
| A | PATENT ABSTRACTS OF JAPAN, vol. 8, no. 97, 8th May 1984, page (P-272) (1534); & JP-A-59-8120 (SHARP) 17-01-1984 | 1,5 | G 11 B 5/00 |
| P,A | EP-A-0 128 625 (PHILIPS) | | |

The present search report has been drawn up for all claims

| Place of search | Date of completion of the search | Examiner |
|---|---|---|
| BERLIN | 23-08-1985 | ROGNONI M.G.L. |